# EUROPEAN PATENT APPLICATION

(11) **EP 4 439 438 A1**
(43) Date of publication of application: **02.10.2024**
(21) Application number: 23220873.6
(22) Date of filing: 30.12.2023
(51) Int. Cl.: G06Q 30/0601, G06Q 20/18, G07F 19/00

(54) **TERMINAL ACCESSIBILITY CUSTOMIZATION**

(30) Priority: 31.03.2023 US 202318129430
(71) Applicant: NCR Voyix Corporation, Atlanta, GA 30308 (US)
(72) Inventor: GODDARD, Anna Kathleen, Rumson, 07760 (US); KERN, Owen Stensrud, Alpharetta, 30009 (US); KHAKI, Erfan, Alpharetta, 30022 (US); LaRochelle, Lauren Amelia Alderman, Atlanta, 30317 (US)
(74) Representative: Secerna LLP

(57) **Abstract**

An individual with an impairment or disability registers terminal accessibility preferences. The individual is provided a code that when scanned at a terminal causes the terminal to configure the transaction interface of the terminal to apply or enforce the individual's registered accessibility preferences in connection with a transaction on the terminal. The individual's registered accessibility preferences can be linked to a loyalty account of the individual such that when the individual initiates a transaction on a terminal and provides their loyalty identifier, the corresponding accessibility preferences are obtained from the loyalty account and applied and/or enforced on the transaction interface during the transaction.

## Description

Despite protections afforded under, for example, the Americans with Disabilities Act (ADA), people who face accessibility issues remain underserved in the retail industry. Kiosks and automated teller machines (ATMs) have limited accessibility feature options to meet the needs of people with visual, auditory, or other impairments. People with these needs may not have the option to use certain kiosks or ATMs. Moreover, even when a terminal provides certain accessibility options, the user is required to manually enter and configure their accessibility settings each time they perform a transaction on such a terminal.

In a first aspect of the present invention there is provided a method, comprising: registering accessibility preferences of a user for performing transactions on terminals; obtaining the registered accessibility preferences in connection with a transaction of the user on a terminal; and causing a transaction interface associated with the terminal to apply and enforce the accessibility preferences during the transaction.

In some embodiments, the method further comprises: registering accessibility features provided by retailers at stores of the retailers and on terminals at each store.

In some embodiments, the method further comprises: maintaining an index of the registered accessibility features.

In some embodiments, the method further comprises: providing retailer category-based and user proximity-based searching of the index through a user interface.

In some embodiments, the method further comprises: providing a legend with search results through the user interface that identifies specific accessibility features associated with the registered accessibility preferences that are supported by each retailer identified in the search results.

In some embodiments, registering further includes receiving, from the user through a user interface, user-selected accessibility features for registration as accessibility preferences of the user.

In some embodiments, registering further includes receiving, from the terminal, user-selected accessibility features for registration as accessibility preferences of the user.

In some embodiments, registering further includes generating a preference code linked to the registered accessibility preferences and sending the preference code to a user interface.

In some embodiments, registering further includes generating a preference code encoded and encapsulated with the registered accessibility preferences and sending the preference code to a user interface.

In some embodiments, registering further includes sending the registered accessibility preferences to a loyalty account associated with the user.

In some embodiments, obtaining further includes receiving an identifier linked to the user, obtaining the registered accessibility preferences based on the identifier, and sending the registered accessibility preferences to an agent of the terminal.

In some embodiments, causing further includes instructing the agent to provide the registered accessibility preferences to a transaction manager of the terminal, wherein the transaction manager configures the transaction interface to apply and enforce the registered accessibility preferences.

In a further aspect of the present invention, there is provided a method, comprising: rendering a transaction interface screen on a terminal, the transaction interface screen comprising an option to register accessibility preferences; responsive to a selection of the option by a user, initiating an agent on the terminal; rendering, by the agent, accessibility feature options in registration screens presented to the user on the terminal; rendering, by the agent, preview screens on the terminal based on user selections of the accessibility feature options from the registration screens; and sending, by the agent, the user selections as registered accessibility preferences to an accessibility manager or a loyalty system to recall and enforce on transaction interfaces during transactions of the user on the terminal and on other terminals.

In some embodiments, the method further comprises: providing, by the agent, a transaction option for the user to perform a current transaction with the registered accessibility preferences on the terminal.

In some embodiments, responsive to a selection by the user of the transaction option: providing the registered accessibility preferences to a transaction manager of the terminal; and instructing the transaction manager to initiate a current transaction for the user within a transaction interface and apply or enforce the registered accessibility preferences during the current transaction.

In some embodiments, the method further comprises: receiving, by the agent, a preference code scanned at the terminal by the user; obtaining the registered accessibility preferences based on the preference code; and instructing a transaction manager of the terminal to initiate a current transaction for the user within a transaction interface and apply or enforce the registered accessibility preferences during the current transaction.

In some embodiments, obtaining further includes decoding the preference code and obtaining the registered accessibility preferences.

In some embodiments, the method further comprises: receiving, by a transaction manager of the terminal, a loyalty identifier from the user; obtaining, by the transaction manager, the registered accessibility preferences from a loyalty system using the loyalty identifier; configuring, by the transaction manager, a transaction interface to enforce and apply the registered accessibility preferences during a current transaction for the user on the terminal; and processing, by the transaction manager, the current transaction through the transaction interface.

In a yet further aspect of the present invention, there is provided a system, comprising: a cloud server comprising a cloud processor, the cloud processor configured to execute instructions that cause the cloud processor to perform operations comprising: interacting one or more of user devices and terminals to register accessibility preferences of users; providing preference codes associated with registered accessibility preferences to the corresponding user devices of registered users; and causing the terminals to enforce and to apply the registered accessibility preferences in transaction interfaces on the terminals during transactions of the registered users.

In some embodiments, the cloud processor is configured to execute additional instructions that cause the cloud processor to perform second operations comprising: maintaining an index of retailers and stores associated with the terminals, wherein the index comprises store addresses for the stores, categories assigned to the retailers, and accessibility features available on store terminals; providing searching capability of the index to user interfaces of the user devices.

In various embodiments, a system and methods for terminal accessibility customization are presented. An individual or user with an impairment or a disability registers their terminal accessibility preferences. When the user performs a transaction at a terminal, the registered accessibility preferences are obtained from a scanned preference code, from a loyalty account associated with a loyalty identifier of the user, or from a manually inserted code. In some embodiments, the user's registered accessibility preferences or a code/identifier representative or otherwise indicative of the registered accessibility preferences may be provided near field communications (NFC) between a device of the user and an NFC transceiver of the terminal. The terminal applies and/or enforces the registered accessibility preferences on a transaction interface of the terminal during a transaction with the user.

In an embodiment, an interface is provided to the user which permits the user to search for available stores with terminals that support the user's accessibility preferences. The search results are filtered by category and/or proximity of the stores to the user. The stores and/or terminals presented in the search results may also include a legend indicating which of the user's accessibility preferences are or are not supported by a given store and/or terminal.
FIG. 1A is a diagram of a system for terminal accessibility customization, according to an example embodiment.
FIG. 1B is a diagram of a preference screen for an accessibility user interface, according to an example embodiment.
FIG. 1C is a diagram of another preference screen for the accessibility user interface, according to an example embodiment.
FIG. 1D is a diagram of yet another preference screen for the accessibility user interface, according to an example embodiment.
FIG. 1E is a diagram of a preference preview screen for the accessibility user interface, according to an example embodiment.
FIG. 1F is a diagram of a set preference screen for the accessibility user interface, according to an example embodiment.
FIG. 1G is a diagram of an accessibility tools screen for the accessibility user interface, according to an example embodiment.
FIG. 1H is a diagram of a mobile-to-terminal navigation screen for the accessibility user interface, according to an example embodiment.
FIG. 1I is a diagram of a user-wallet screen depicting a preference code for customized user accessibility preferences, according to an example embodiment.
FIG. 1J is a diagram of a navigation screen for the accessibility user interface, according to an example embodiment.
FIG. 1K is a diagram of a category-specific navigation screen for the accessibility user interface, according to an example embodiment.
FIG. 1L is a diagram of a search result screen for a category-specific search within the accessibility user interface, according to an example embodiment.
FIG. 1M is a diagram of a map view screen for a search within the accessibility user interface, according to an example embodiment.
FIG. 1N is a diagram of a filter screen for a search within the accessibility user interface, according to an example embodiment.
FIG. 1O is a diagram of another filter screen for a search within the accessibility user interface, according to an example embodiment.
FIG. 1P is a diagram of a filter-applied search result screen for the accessibility user interface, according to an example embodiment.
FIG. 2 is a flow diagram of a method for terminal accessibility customization, according to an example embodiment.
FIG. 3 is a flow diagram of another method for terminal accessibility customization, according to an example embodiment.

Consumers who suffer from some form of disability may in some instances find it difficult to access and use self-service terminals (SSTs). Moreover, the trend in retail towards increased use of SSTs as compared to cashier-assisted lanes is exacerbating the situation more individuals with disabilities. Further, people with disabilities often find it difficult to obtain cash from their bank accounts since bank branches have limited store hours and limited presence in some communities. While automated teller machines (ATMs) are pervasive in stores and in outdoor environments, ATMs also have limited accessibility options.

The above-noted technical problems associated with use of SSTs by individuals with disabilities are resolved by the technical solutions provided herein and below. According to example embodiments of the technology disclosed herein, an individual with a disability is provided a user interface on a user-operated device which permits the individual to customize their accessibility options, view and test the options selected on their device, link their accessibility preference options to a preference code, and save their preferences for use during transactions performed at different terminals. Terminals are enhanced to accept a preference code presented by the individual, determine the user's accessibility preferences from the preference code, and automatically configure the terminal's transaction interface based on the user's preferences for a transaction with the user. In some cases, terminals also permit the transaction interface to be navigated with the user's accessibility preferences through a navigation control on the user's device.

Additionally, the interface provides category and proximity-based searches for retail stores that have the enhanced terminals for use by the user. Search results are also filtered based on user-selected filter criteria. Moreover, the search results may include an accessibility legend that permits the user to see which accessibility features associated with the user's saved preferences are supported at each of the stores provided in the search results.

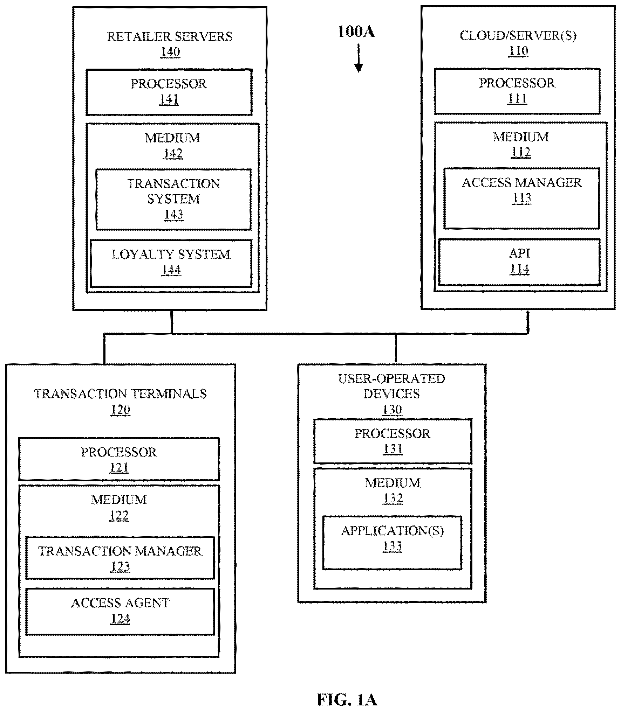

FIG. 1A is a diagram of a system 100A for terminal accessibility customization, according to an example embodiment. It is noted that the components are shown schematically in simplified form, with only those components relevant to understanding of the embodiments being illustrated.

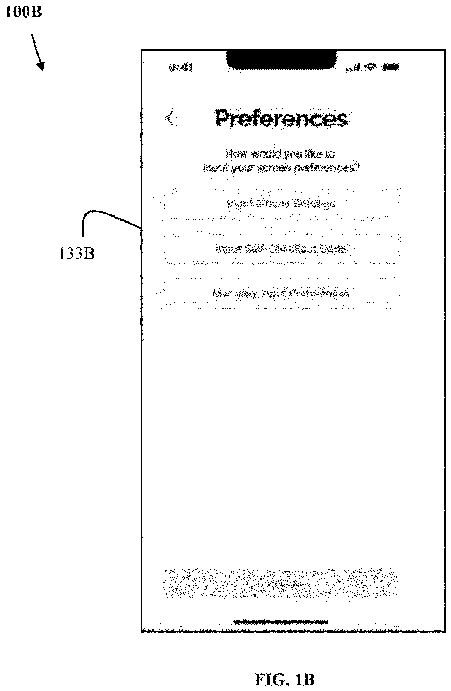

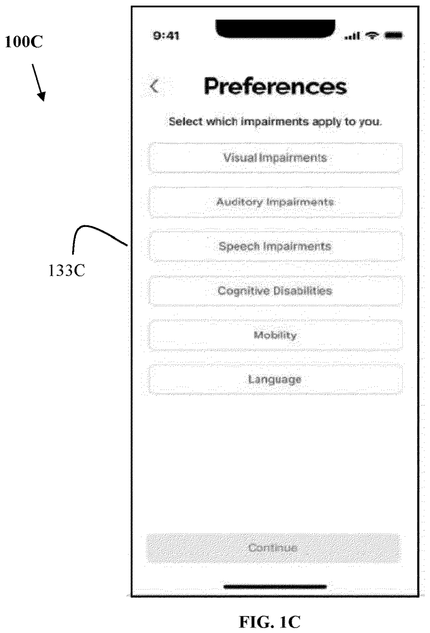

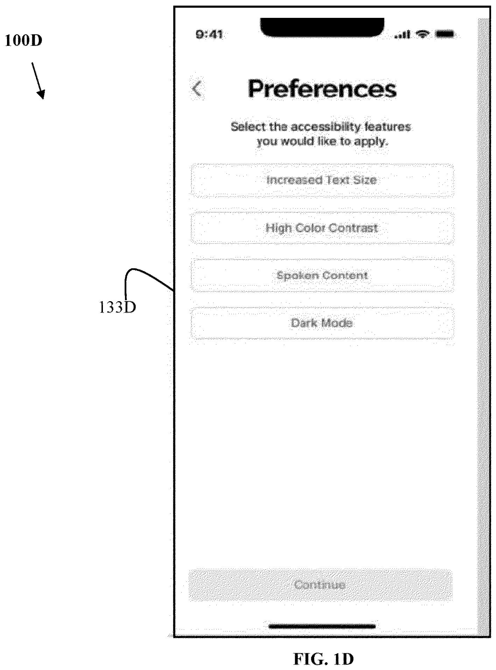

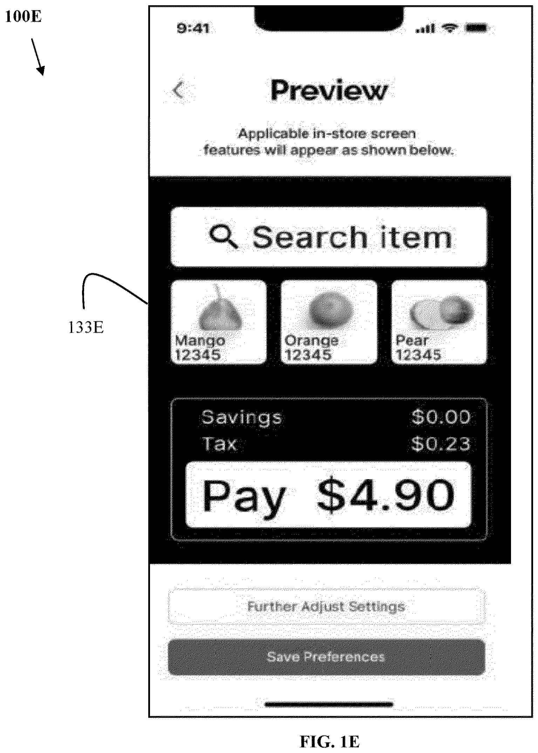

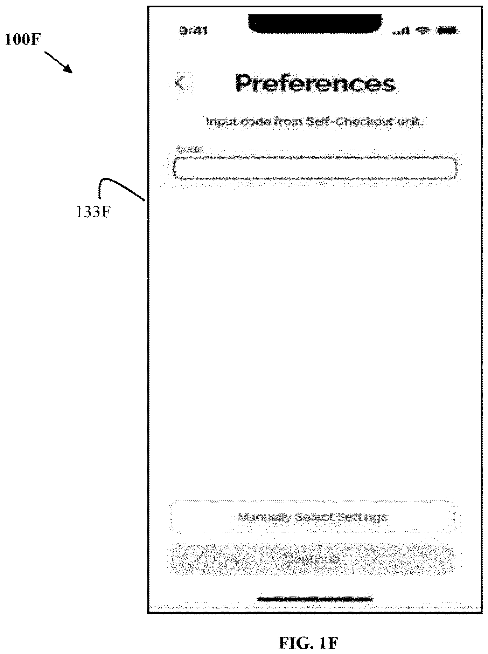

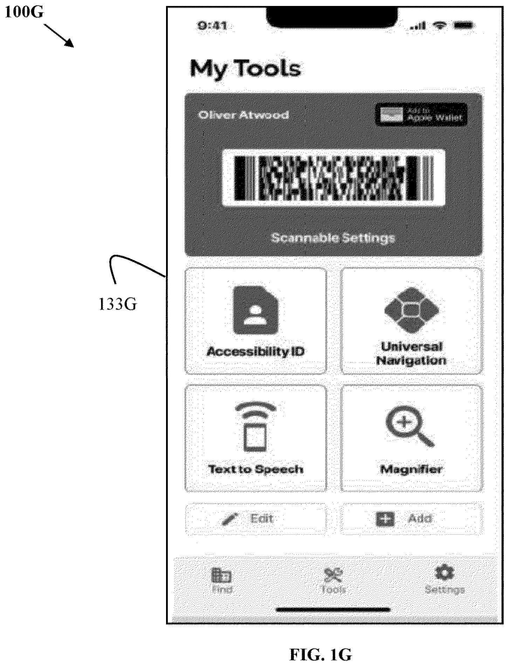

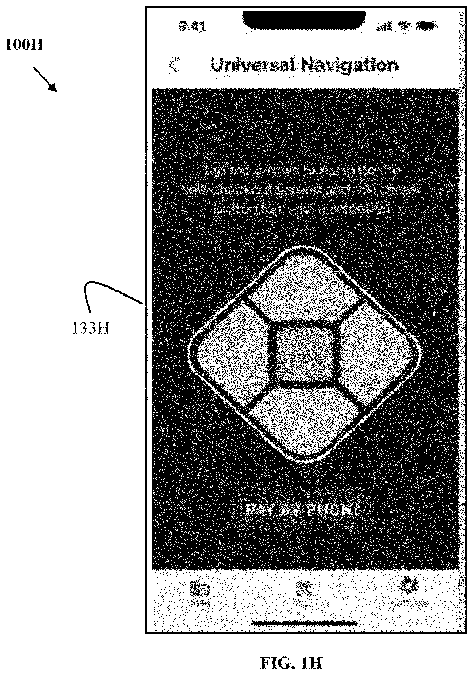

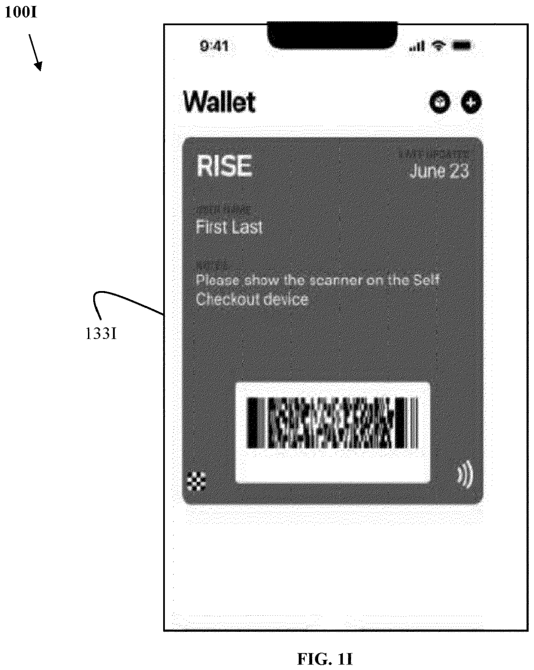

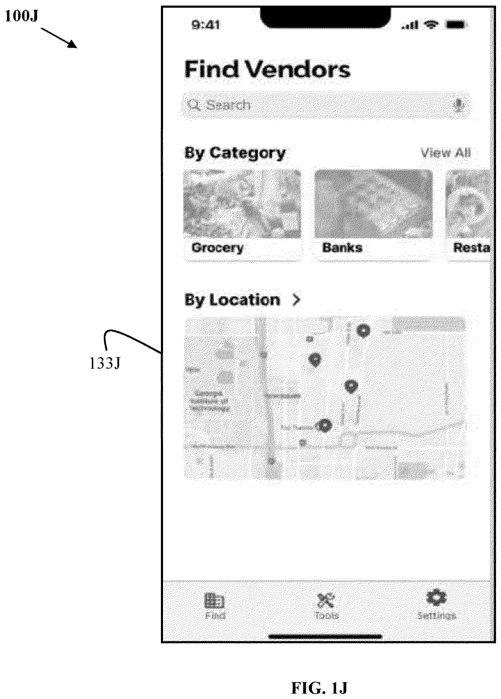

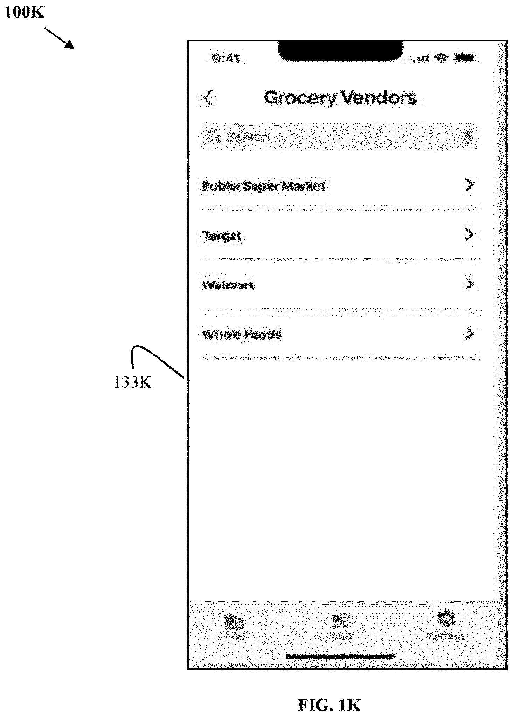

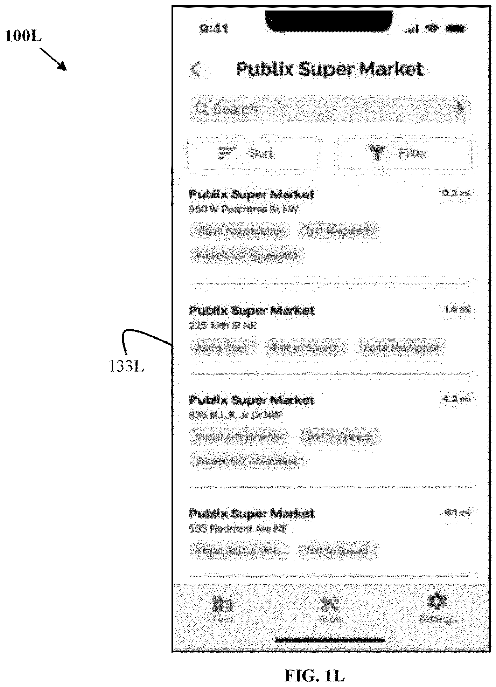

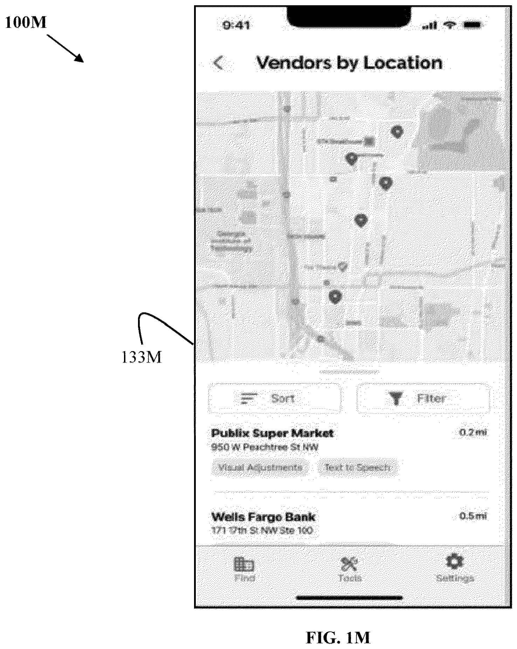

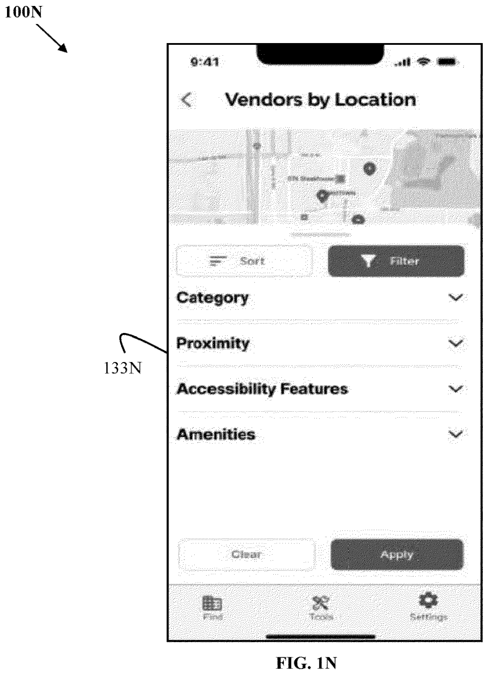

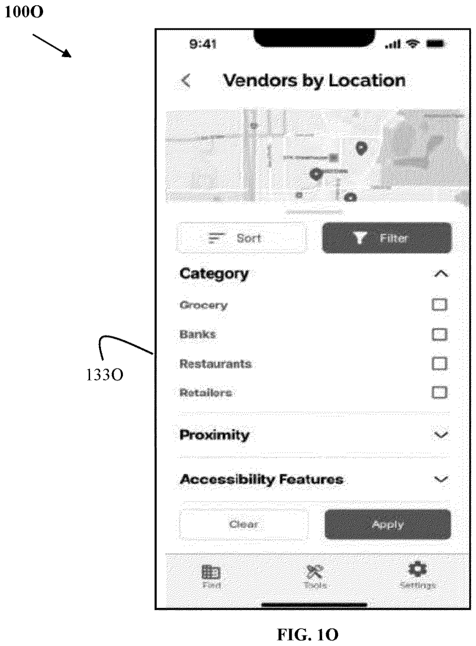

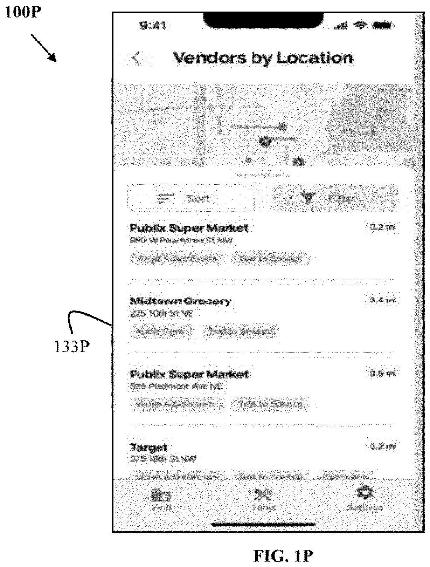

Furthermore, the various components shown in FIG. 1 and the arrangement of such components is presented for purposes of illustration only. It is to be noted that other arrangements with more or less components are possible without departing from the teachings of terminal accessibility customization processing presented herein and below.

System 100 includes a cloud 110 or a server 110 (hereinafter "cloud" 110), transaction terminals 120, user-operated devices 130, and retailer servers 140. Cloud 110 includes a processor 111 and a non-transitory computer-readable storage medium (hereinafter "medium") 112, which includes executable instructions for an access manager 113 and an application programming interface (API) 114. Processor 111 obtains or is provided the executable instructions from the medium 112 causing processor 111 to perform operations discussed herein and below with respect to 113 and 114.

Each transaction terminal (hereinafter "terminal") 120 includes a processor 121 and a medium 122, which includes executable instructions for a transaction manager 123 and an access agent 124. Processor 121 obtains or is provided the executable instructions from medium 122 causing processor 121 to perform operations discussed herein and below with respect to 123 and 124.

Each user-operated device 130 includes a processor 131 and a medium 132, which includes executable instructions for one or more applications (apps) 133. Processor 131 obtains or is provided the executable instructions from medium 132 causing processor 131 to perform operations discussed herein and below with respect to 133.

Each retailer server 140 includes a processor 141 and a medium 142, which includes executable instructions for a transaction system 143 and a loyalty system 144. Processor 141 obtains or is provided the executable instructions from medium 142 causing processor 141 to perform operations discussed herein and below with respect to 143 and 144.

Initially, an individual with a disability including, but not limited to, a physical/mental impairment registers their accessibility preferences with access manager 113. This can be achieved in a variety of different manners.

In a first case, the individual (hereinafter "user") accesses a user interface of app 133 via which the accessibility preferences can be provided. The accessibility preferences can include, by way of example only, voice guidance, an auditory volume level, a text font size, a brightness/contrast level, and indication as to whether the user wants to use a user device-based navigator to interact with a transaction interface from the user device and navigate transaction interface screens at a terminal 120, etc. The user interface of app 133 may present different types of impairments for which the user desires to include preferences such as visual impairments, auditory impairments, speech impairments, cognitive impairments, physical mobility impairments, and/or language impairments.

In response to receiving input indicative of the user's impairments/disabilities and desired accessibility preferences, access manager 113 presents examples of the user's selections in preview screens along with example spoken content, if applicable. The user is able to review these preview screens and further adjust their preferences until the user is satisfied with their selected preferences.

Access manager 113 saves the user's accessibility preferences in an account linked to the user. Access manager 113 also generates a preference code associated with the preferences and returns the preference code back to the user for storage and access via app 133. In an embodiment, the preference code is a barcode or quick response (QR) code that encodes and encapsulates settings for the user's accessibility preferences in a data structure embedded in the barcode or QR code. In some embodiments, the user is given the option through the user interface of app 133 of having access manager 113 save and link the preferences to an account of the user or delete the preferences once the QR code is provided to the user. In an embodiment, the preference code is a barcode that is encoded with an identifier to the user's account for purposes of subsequently retrieving the user's linked preferences.

In an embodiment, the user interface of app 133 permits the user to enter loyalty identifiers which the user maintains for loyalty accounts with retailers. Access manager 113 uses API 114 to store the user's accessibility preferences in a loyalty account profile with the corresponding loyalty systems 144 of the corresponding retailers.

In a second case, the user approaches a terminal 120 to conduct a transaction or simply for the purposes of registering their accessibility preferences. The transaction interface splash screen rendered on the terminal 120 by transaction manager 123 is enhanced to include an option to register accessibility preferences. When the option is selected, access agent 124 is initiated and interacts with access manager 113 for the purposes of registering the user and the user's accessibility preferences. The terminal 120 may present screens hosted by access manager 113 that are similar to the screens discussed above when the user was using the user interface of app 133 to register their accessibility preferences.

In an embodiment, when the user is satisfied with the user-selected preferences and has viewed the corresponding preview screens, agent 124 may prompt the user to enter their device number, such as phone number. Once the phone number is entered, a random unique code or random number may be generated and displayed on the terminal 120 to the user by agent 124. Agent 124 may also send the code/number to manager 113 to allow manager 113 to identify terminal 120. The user may enter the code/number within the user interface of app 133 causing access manager 113 to send the registered preferences of the user as a QR code or barcode to app 133 for storage during subsequent transactions of the user at other terminals 120.

In an embodiment, agent 124 provides an option to the user to proceed with a transaction on terminal 120 using the registered user accessibility preferences. When the user indicates that they wish to proceed with a transaction, agent 124 uses an API to instruct manager 123 to configure the transaction interface for the transaction with the accessibility preferences. The transaction is processed on terminal 120 with manager 123 rendering the transaction interface screens and any transaction spoken audio according to the accessibility preferences applied or enforced for the transaction.

In a third case, the user lacks any app 133 installed on device 130 and is at a terminal 120 for purposes of registering their accessibility preferences and/or performing a transaction on the terminal 120 with registered accessibility preferences applied and/or enforced. In this situation, agent 124 displays a QR code following registration of the accessibility preferences. The QR code is encoded with a link to access manager 113 such that when the user scans or captures an image of the QR code from a display of terminal 120 a browser or an app store on the device is activated and redirected to download and install app 133 on the user's device 130. In an embodiment, the QR code is also encoded with the user's accessibility preferences, once app 133 is downloaded, installed, and initiated on device 130, app 133 interacts with access manager 113 to receive a new QR code or bar code that is encoded with or provides a link to the user's accessibility preferences. Again, the user is provided an option through agent 124 to proceed with a transaction on terminal 120 with the registered accessibility preferences applied and/or enforced during the transaction by manager 123.

In a fourth case, the user, similar to the third case, obtains a QR code with a link to download app 133 from agent 124. However, this is before the user has entered any accessibility preferences through the user interface of agent 124. Once the app 133 is downloaded, installed, and initiated, the user is given the option through the user interface of app 133 to proceed with registering the accessibility preferences on the terminal 120 or via device 130. The QR code is further encoded with a code or number generated by agent 124 such that when the user opts to provide the accessibility preferences via the terminal 120, the code or number is used by access manager 113 to identify the terminal 120 and instruct access agent 124 to initiate the registration through the user interface of agent 124 on the terminal 120. The code or number is also used when the user elects to register the accessibility preferences via the user interface of app 133. In this case, the user receives a QR code or barcode for the registered preferences via app 133 from manager 113 and then the user is asked in the user interface if the user wants to continue with a transaction on terminal 120. The user can either scan the QR code at the terminal or access manager 113 sends the accessibility preferences to agent 124 and instructs the agent 124 to start the transaction with manager 123 on terminal 120 such that the user is not required to scan the QR code with the registered accessibility preferences.

Once the user has registered their accessibility preferences either through the user interface of app 133 or a user interface of agent 124, the user is not required to manually enter their accessibility preferences for any subsequent transaction at any terminal 120. Instead, the user scans the preference code at the corresponding terminals 120 and agent 124 is activated. Agent 124 either decodes the preference code to obtain the accessibility preferences or decodes the preference code to obtain an identifier for obtaining the accessibility preferences from access manager 113.

In an embodiment, the user's registered access preferences are linked to a user's loyalty account as discussed above. In this situation, transaction manager 123 is enhanced to obtain the user's accessibility preferences from the corresponding loyalty system 144 and configure the transaction interface with the corresponding preferences for a transaction with the user. Here, the user scans a loyalty card or enters their loyalty identifier and there is no requirement that agent 124 be activated or initiated.

App 133 also provides a search functions accessible through the user interface of app 133 to the user. Access manager 113 maintains an indexed data store that includes store identifiers for stores, terminal identifiers for terminals 120 of each store, geographical location and address for each store, an accessibility preferences supported for each terminal 120. A current location of device 130 is reported by app 133 to manager 113 using the device's location services. The user interface of app 133 provides a variety of search and navigation screens for receiving search criteria for searches and applying filtering criteria to results of searches. The user is able to search and navigate for stores by category, by retailers, and by proximity to the user via entered search . Access manager 113 provides search results to app 133 for presenting within the user interface screens to the user. The search results filtering criteria is applied by app 133 or by manager 113 on behalf of app 133. Furthermore, each search results provides the user with an indication as to which accessibility preferences of the user is or is not supported on a corresponding store's terminal 120. This permits the user to decide which store and terminal of a store to visit for a transaction.

In an embodiment, retailers register and publish their stores, each store's address, the terminals of each store and the accessibility preferences supported by each terminal through a registration interface with access manager 113. The published information is maintained in the index data store for user searching through app 133.

A variety of example screen shots rendered by app 133 are now discussed with reference to FIGS. 1B-1P. It is noted that these are presented for purposes of illustration and that variations with more or less screen options and information are intended to fall within the scope of the teachings presented herein for terminal accessibility customization.

FIG. 1B is a diagram 100B of a preference screen 133B for an accessibility user interface, according to an example embodiment. The user is presented with options to input accessibility preferences using existing phone settings, a terminal 120, or manually through the user interface of app 133.

When the user selects the input phone settings option, app 133 obtains accessibility settings that the user has already set on their device 130 via the operating system (OS) of the device 130. App 133 then provides the settings to manager 113 which maps the existing phone settings to specific selections of accessibility preferences.

When the user selects the manually input preferences option, app 133 permits the users to set and view preferences in example screens and sample spoken audio via the user interface of app 133. When the user selects the input self-checkout code/number option, another screen 133F shown in FIG. 1F is presented to the user within the user interface for the user to enter the code/number displayed on the terminal by agent 124 as was discussed above.

FIG. 1C is a diagram 100C of another preference screen 133C for the accessibility user interface, according to an example embodiment. Screen 133C is presented to the user by app 133 within the user interface when the user selected the manually input preferences option in screen 133B. Screen 133C list the types of impairments for which there are accessibility features to select the user's preferences from. For example, screen 133C shows visual impairments, auditory impairments, speech impairments, cognitive disabilities, physical mobility impairments, and language impairments. When the user selects a given impairment/ disability, the corresponding available accessibility features for the user to select from are presented in subsequent screens.

FIG. 1D is a diagram 100D of yet another preference screen 133D for the accessibility user interface, according to an example embodiment. Based on a user selection of visual impairments in screen 133C, for example, app 133 presents screen 133D within the user interface for the user to select the accessibility features desired by the user. As an example, the accessibility features are shown as features to increase text size, high color contrast, spoken content, and dark mode for users with light sensitivity.

FIG. 1E is a diagram 100E of a preference preview screen 133E for the accessibility user interface, according to an example embodiment. Screen 133E is rendered by app 133 within the user interface after the user makes selections of features desired in screen 133D. Agent applies the corresponding features to a sample transaction interface screen of an example terminal 120 for the user to view along with an option to adjust the default settings that were applied by app 133. Selection of the adjust settings option, presents user options to adjust font size, color contrast, brightness, etc. Once the user adjusts the settings, app 133 presents the sample transaction interface screen with the adjusted settings applied to the user for acceptance.

It is to be noted that app 133 can also provide spoken audio with the sample transaction interface screen. The user is presented with options to raise and lower the audio, change a voice used by the computer-generated speaker, change a language of the spoken audio, etc.

FIG. 1F is a diagram 100F of a set preference screen 133F for the accessibility user interface, according to an example embodiment. Screen 133F is activated when the user selected the input self-checkout code/number as an indication that the user is at a terminal 120 and desires to provide the accessibility preferences for registration via the terminal 120. The code/number was randomly generated by agent 124 and when entered by the user into the code/number entry field of screen 133F causes app 133 to provide the code to manager 123. Manager 123 identifies the terminal 120 via the code/number and instructs agent 124 to initiate the user interface screens for registering the user's accessibility preferences on terminal 120.

In an embodiment, the screens generated by agent 124 for the user to register preferences of the user are the same screens and same user interface workflow as what was discussed above when the user entered preferences through the user interface of app 133. Here, both app 133 and agent 124 are synchronized to show the same sample screens and process the same workflow set of options to preview selections of the user and record user settings. However, due to the differences in display size, the dimensions of the screens are smaller on the user device display than they are on the terminal display.

FIG. 1G is a diagram 100G of an accessibility tools screen 133G for the accessibility user interface, according to an example embodiment. App 133 provides a variety of accessibility tools and features to the user through the user interface, some of which were discussed above. For example, accessibility identifier option permits the user to assign loyalty identifiers and/or modify previous registered preferences. The text to speech option allows the user to use speech to select, input, and navigate the user interface screens which set the preferences. The magnifier option allows the user to increase the font and image sized within the user interface of app 133.

The universal navigator option is a feature that allows the user during a transaction to navigate and make selections from the transaction interface screens of transaction manager 123 using the app 133 user interface and a graphically rendered image of an input controller. The input controller includes a right, left, up, down, and center selectable option. The center is an enter or selection button. The up, down, right, and left, navigates the focus within the fields and entry fields present in the transaction interface screens on the terminal 120.

The barcode displayed includes a selectable option to add the preferences to the user's Apple^{®} Wallet^{®}. This is discussed in more detail below in FIG. 1I.

FIG. 1H is a diagram 100H of a mobile-to-terminal navigation screen 133H for the accessibility user interface, according to an example embodiment. Screen 133H is presented within the user interface of app 133 when the user selects the universal navigator option from the tools screen 133G.

Screen 133H shows the navigation features of the mobile-to-terminal navigation features of app 133. An additional feature permits the user to pay for a transaction through transaction manager 123 using their phone 130. A direct or indirect connection between the phone 130 and the terminal 120 is established. The controls touched on screen 133H are translated into a human input device (HID) format and forwarded to terminal 120 where either the OS of terminal 120 or manager 123 receives the touched controls as HID events causing the focus and selection within the transaction screens to change accordingly.

FIG. 1I is a diagram 1001 of a user-wallet screen 1331 depicting a barcode for customized user accessibility preferences, according to an example embodiment. App 133 provides an option for the user to have their preference code stored in a wallet app of the user's device 130. Screen 1331 depicts an imported preference code for a user into a generic wallet app of the device 130 and displayed to the user through a user interface of the wallet app when selected by the user. The user can scan the preference code at the terminal 120 for purposes of having the transaction interface screen apply and enforce the user's accessibility preferences as discussed above. This permits the preference code to be stored outside of app 133 on the user's device 130. The preference code can be scanned at multiple different terminals to cause the terminal to retrieve, apply, and enforce the user's accessibility preferences encoded therein. Thus, in this manner, the user's accessibility preferences are portable from one terminal to the next to cause accessibility features associated with each such terminal to be made available to the user in accordance with their preferences, thereby obviating the the need for the user to independently select accessibility features at each terminal, which is cumbersome.

FIG. 1J is a diagram 100J of a navigation screen 133J for the accessibility user interface, according to an example embodiment. Screen 133J illustrates example search features of app 133 and manager 113 presented within the user interface of app 133. For example, the user can search by category of retailer and/or by location.

FIG. 1K is a diagram 100K of a category-specific navigation screen 133K for the accessibility user interface, according to an example embodiment. Screen 133K is presented when a user selects a grocery category from screen 133J for purposes of browsing and searching for a grocery store with the user's registered accessibility preferences available on one or more terminals 120 of the store.

FIG. 1L is a diagram 100L of a search result screen 133L for a category-specific search within the accessibility user interface, according to an example embodiment. For example, screen 133L is presented when a user selects PUBLIXO Super Market from screen 133K. App 133 sorts, within screen 133L, the selected grocery stores available to the user based on proximity of the stores to the user. This provides a proximity-based context to the user when selecting a given store of the retailer selected.

FIG. 1M is a diagram 100M of a map view screen 133M for a search within the accessibility user interface, according to an example embodiment. Screen 133M is presented to the user when a user selects a proximity-based search generically without any specific retail category. In the example, app 133 also incorporates a map with the retailers labeled for viewing by the user and each of the labeled retailers with their current distance from the user.

FIG. 1N is a diagram 100N of a filter screen 133N for a search within the accessibility user interface, according to an example embodiment. Screen 133N is presented when the user desires to perform a search of retailers based on specified filter criteria, which may include proximity of the retailers to the user, retailer category, accessibility features, and/or amenities offered by the retailers.

FIG. 1O is a diagram 100O of another filter screen 1330 for a search within the accessibility user interface, according to an example embodiment. Screen 1330 is presented when the user selects the category-based filter criteria from screen 133N. The categories of retailers are presented to the user for further selection and refinement of the user's search.

FIG. 1P is a diagram 100P of a filter-applied search result screen 133P for the accessibility user interface, according to an example embodiment. Screen 133P is presented to the user when the user selects the grocery category from the filter criteria in screen 133N. The search results are displayed based on the refinement by the user of the filter criteria and sorted based on proximity of the grocery stores to the user.

In an embodiment, access agent 124 is subsumed into transaction manager 123. That is, transaction manager 123 is enhanced to process the registration workflow discussed above with agent 124 and the interaction with manager 113.

In an embodiment, access manager 113 is subsumed into a given loyalty system 144 or transaction system 143 of a given retailer server 140. That is, the loyalty system 144 or transaction system 143 is enhanced to process the workflows and operations discussed above for access manager 113.

In an embodiment, terminals 120 include ATMs, SSTs, and/or kiosks. The kiosks include travel-related kiosks, restaurant kiosks, media kiosks, reservation kiosks, informational kiosks, etc.

In an embodiment, the preference code is a QR code, a barcode, a numeric code, an alphabetic code, an alphanumeric code, or any other code or string suitable for encoding the user's accessibility preferences and/or an identifier and link to obtain the user's accessibility preferences. In an embodiment, the preference code is an NFC code transmitted between the terminal 120 and user device 130 via a tap of the user device 130 on an NFC transceiver of the terminal 120.

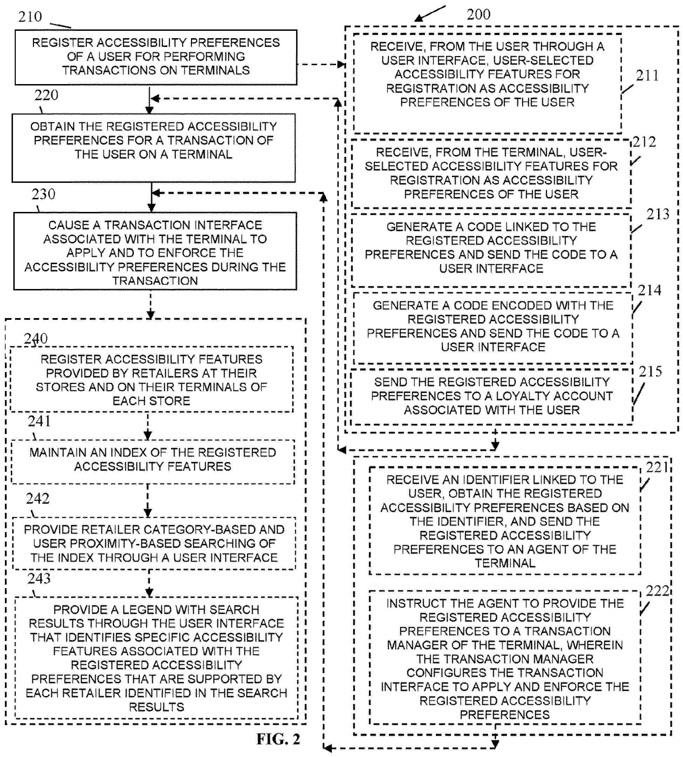

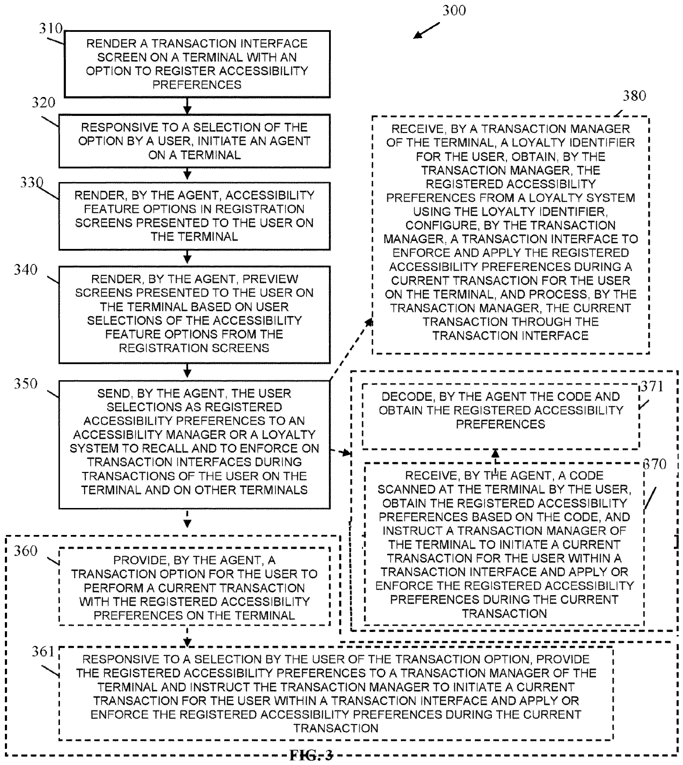

The above-referenced embodiments and other embodiments will now be discussed with reference to FIGS. 2 and 3. FIG. 2 is a flow diagram of a method 200 for terminal accessibility customization, according to an example embodiment. The software module(s) that implements the method 200 is referred to as an "accessibility manager." The accessibility manager is implemented as executable instructions programmed and residing within memory and/or a non-transitory computer-readable (processor-readable) storage medium and executed by one or more processors of one or more devices. The processor(s) of the device(s) that executes the accessibility manager are specifically configured and programmed to process accessibility manager. The accessibility manager has access to one or more network connections during its processing. The connections can be wired, wireless, or a combination thereof.

In an embodiment, the device that executes the accessibility manager is cloud 110. In an embodiment, the device that executes accessibility manager is server 110. In an embodiment, the device that executes the accessibility manager is retailer server 140. In an embodiment, the accessibility manager is all of, or some combination of 113, 114, 143, and/or 144.

At 210, the accessibility manager registers accessibility preferences of a user for performing transactions on terminals 120. In an embodiment, at 211, the accessibility manager receives, from a user through a user interface of an app 133, user-selected accessibility features for registration as accessibility preferences of the user. In an embodiment, at 212, the accessibility manager receives, from the terminal 120, user-selected accessibility features for registration as accessibility preferences of the user.

In an embodiment, at 213, the accessibility manager generates a preference code linked to the registered accessibility preferences and sends the preference code to a user interface of an app 133. In an embodiment, at 214, the accessibility manager generates a preference code encoded with and encapsulating values associated with the registered accessibility preferences and sends the preference code to a user interface.

In an embodiment, at 215, the accessibility manager sends the registered accessibility preferences to a loyalty account associated with the user. The loyalty account is maintained by a loyalty system 144.

At 220, the accessibility manager obtains the registered accessibility preferences for a transaction of the user on a terminal 120. The registered accessibility preferences can be obtained for the terminal in a variety of manners.

For instance, in an embodiment, at 221, the accessibility manager receives an identifier linked to the user, obtains the registered accessibility preferences based on the identifier, and sends the registered accessibility preferences to an agent 124 of the terminal 120. In an embodiment, at 222, the accessibility manager instructs the agent 124 to provide the registered accessibility preferences to a transaction manager 123. The transaction manager 123 configures the transaction interface of the terminal 120 to apply and enforce the registered accessibility preferences.

At 230, the accessibility manager causes a transaction interface associated with the terminal 120 to apply and to enforce the accessibility preferences during the transaction. This can be done through the transaction manager 123 which controls and provides the transaction interface for the transaction on the terminal 120.

In an embodiment, at 240, the accessibility manager registers accessibility features provided by retailers at their stores on terminals 120 of each store. In an embodiment of 240 and at 241, the accessibility manager maintains an index of the registered accessibility features. In an embodiment of 241, and at 242, the accessibility manager provides retailer category-based and user proximity-based searching of the index through a user interface of app 133. In an embodiment of 242, and at 243, the accessibility manager provides a legend with search results through the user interface that identifies specific accessibility features associated with the registered accessibility preferences that are supported by each retailer identified in the search results.

FIG. 3 is a flow diagram of a method 300 for terminal accessibility customization, according to an example embodiment. The software module(s) that implements the method 300 is referred to as an "accessibility agent." The accessibility agent is implemented as executable instructions programmed and residing within memory and/or a non-transitory computer-readable (processor-readable) storage medium and executed by one or more processors of one or more devices. The processor(s) of the device(s) that executes the accessibility agent are specifically configured and programmed to process accessibility agent. The accessibility agent has access to one or more network connections during its processing. The connections can be wired, wireless, or a combination thereof.

In an embodiment, the device that executes the accessibility agent is transaction terminal 120. In an embodiment, terminal 120 is an automated teller machine, a self-service terminal, a point-of-sale terminal, or a kiosk. In an embodiment, the accessibility agent is access agent 124 and/or transaction manager 123.

The access agent interacts with the method 200, user-operated device 130, and/or retailer server 140. The access agent presents another and, in some ways, an enhanced processing perspective to that which was discussed above with agent 124 and/or transaction manager 123 in system 100A.

At 310, the access agent, renders a transaction interface screen on a terminal 120 with an option to register accessibility preferences. In an embodiment, the screen is a splash screen before any transaction is initiated on the terminal 120.

At 320 responsive to a selection of the option by a user, the access agent is initiated on the terminal 120. The initiation is directed to obtaining registered accessibility preferences from the user at the terminal 120.

At 330, the access agent renders accessibility feature options in registration screens presented to the user on the terminal 120. In an embodiment, the registration screens are screens which are also presented by the user interface of app 133 and discussed above with respect to FIGS. 1B-1E.

At 340, the access agent renders preview screens presented to the user on the terminal 120 based on user selections of accessibility feature options from the registration screen. An example, preview screen with example user selections of accessibility features options selected was presented above with FIG. 1E.

At 350, the access agent sends the user selections as registered accessibility preferences to an accessibility manager 113 or to a loyalty system 144. This links the user via a user identifier to the registered accessibility preferences for the accessibility manager 113 or the loyalty system 144 to recall and then enforce on transaction interfaces during transactions of the user on the terminal 120 and other terminals 120.

In an embodiment, at 360, the access agent provides a transaction option for the user to perform a current transaction with the registered accessibility preferences enforced on the transaction interface of the terminal 120. In an embodiment of 360 and at 361, the access agent, responsive to a selection by the user of the transaction option, provides the registered accessibility preferences to a transaction manager 123 of the terminal 120. The access agent instructs the transaction manager 123 to initiate a current transaction for the user within a transaction interface and apply or enforce the registered accessibility preferences during the current transaction.

In an embodiment, at 370, the access agent receives a preference code scanned at the terminal 120 by the user. In response to the preference code, the access agent obtains the registered accessibility preferences and instructs a transaction manager 123 of the terminal 120 to initiate a current transaction for the user within a transaction interface and apply or enforce the registered accessibility preferences during the current transaction. In an embodiment of 370 and at 371, the access agent decodes the preference code and obtains the registered accessibility features that corresponding to the registered accessibility features directly from a decoded version of the preference code.

In an embodiment, at 380, a transaction manager 123 of the terminal 120 receives a loyalty identifier for the user. The transaction manager 123 obtains the registered accessibility preferences from a loyalty system 144 using the loyalty identifier. The transaction manager 123 configures a transaction interface to enforce and apply the registered accessibility preferences during a current transaction for the user on the terminal 120. The transaction manager 123 processes the current transaction through the transaction interface. It is noted, as was stated above that the access agent can be both agent 124 and transaction manager 123. Further agent 124 can be a subsumed and processed by an enhanced transaction manager 123.

The above description is illustrative, and not restrictive. Many other embodiments will be apparent to those of skill in the art upon reviewing the above description. The scope of embodiments should therefore be determined with reference to the appended claims, along with the full scope of equivalents to which such claims are entitled.

In the foregoing description of the embodiments, various features are grouped together in a single embodiment for the purpose of streamlining the disclosure. This method of disclosure is not to be interpreted as reflecting that the claimed embodiments have more features than are expressly recited in each claim. Rather, as the following claims reflect, inventive subject matter lies in less than all features of a single disclosed embodiment. Thus, the following claims are hereby incorporated into the Description of the Embodiments, with each claim standing on its own as a separate exemplary embodiment.

Throughout the description and claims of this specification, the words "comprise" and "contain" and variations of them mean "including but not limited to" and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of the features and/or steps are mutually exclusive. The invention is not restricted to any details of any foregoing embodiments. The invention extends to any novel one, or novel combination, of the features disclosed in this specification (including any accompanying claims, abstract and drawings), or to any novel one, or any novel combination, of the steps of any method or process so disclosed.

The reader's attention is directed to all papers and documents which are filed concurrently with or previous to this specification in connection with this application and which are open to public inspection with this specification, and the contents of all such papers and documents are incorporated herein by reference.

## Claims

1. A method, comprising:
registering accessibility preferences of a user for performing transactions on terminals;
obtaining the registered accessibility preferences in connection with a transaction of the user on a terminal; and
causing a transaction interface associated with the terminal to apply and enforce the accessibility preferences during the transaction.

2. The method of claim 1 further comprising:
registering accessibility features provided by retailers at stores of the retailers and on terminals at each store.

3. The method of claim 2 further comprising:
maintaining an index of the registered accessibility features.

4. The method of claim 3 further comprising:
providing retailer category-based and user proximity-based searching of the index through a user interface and optionally
providing a legend with search results through the user interface that identifies specific accessibility features associated with the registered accessibility preferences that are supported by each retailer identified in the search results.

5. The method of claim 1, wherein registering further includes receiving, from the user through a user interface, user-selected accessibility features for registration as accessibility preferences of the user.

6. The method of claim 1, wherein registering further includes receiving, from the terminal, user-selected accessibility features for registration as accessibility preferences of the user.

7. The method of claim 1, wherein registering further includes generating a preference code linked to the registered accessibility preferences and sending the preference code to a user interface.

8. The method of claim 1, wherein registering further includes generating a preference code encoded and encapsulated with the registered accessibility preferences and sending the preference code to a user interface.

9. The method of claim 1, wherein obtaining further includes receiving an identifier linked to the user, obtaining the registered accessibility preferences based on the identifier, and sending the registered accessibility preferences to an agent of the terminal and optionally causing further includes instructing the agent to provide the registered accessibility preferences to a transaction manager of the terminal, wherein the transaction manager configures the transaction interface to apply and enforce the registered accessibility preferences.

10. A method, comprising:
rendering a transaction interface screen on a terminal, the transaction interface screen comprising an option to register accessibility preferences;
responsive to a selection of the option by a user, initiating an agent on the terminal;
rendering, by the agent, accessibility feature options in registration screens presented to the user on the terminal;
rendering, by the agent, preview screens on the terminal based on user selections of the accessibility feature options from the registration screens; and
sending, by the agent, the user selections as registered accessibility preferences to an accessibility manager or a loyalty system to recall and enforce on transaction interfaces during transactions of the user on the terminal and on other terminals.

11. The method of claim 10 further comprising:
providing, by the agent, a transaction option for the user to perform a current transaction with the registered accessibility preferences on the terminal and optionally, responsive to a selection by the user of the transaction option, the method further comprises:
providing the registered accessibility preferences to a transaction manager of the terminal; and
instructing the transaction manager to initiate a current transaction for the user within a transaction interface and apply or enforce the registered accessibility preferences during the current transaction.

12. The method of claim 10 further comprising:
receiving, by the agent, a preference code scanned at the terminal by the user;
obtaining the registered accessibility preferences based on the preference code;
instructing a transaction manager of the terminal to initiate a current transaction for the user within a transaction interface and apply or enforce the registered accessibility preferences during the current transaction; and optionally obtaining further includes decoding the preference code and obtaining the registered accessibility preferences.

13. The method of claim 10 further comprising:
receiving, by a transaction manager of the terminal, a loyalty identifier from the user;
obtaining, by the transaction manager, the registered accessibility preferences from a loyalty system using the loyalty identifier;
configuring, by the transaction manager, a transaction interface to enforce and apply the registered accessibility preferences during a current transaction for the user on the terminal; and
processing, by the transaction manager, the current transaction through the transaction interface.

14. A system, comprising:
a cloud server comprising a cloud processor,
the cloud processor configured to execute instructions that cause the cloud processor to perform operations comprising:
interacting one or more of user devices and terminals to register accessibility preferences of users;
providing preference codes associated with registered accessibility preferences to the corresponding user devices of registered users; and
causing the terminals to enforce and to apply the registered accessibility preferences in transaction interfaces on the terminals during transactions of the registered users.

15. The system of claim 14, wherein the cloud processor is configured to execute additional instructions that cause the cloud processor to perform second operations comprising:
maintaining an index of retailers and stores associated with the terminals, wherein the index comprises store addresses for the stores, categories assigned to the retailers, and accessibility features available on store terminals;
providing searching capability of the index to user interfaces of the user devices.

## Amended claims

### Amended claims in accordance with Rule 137(2) EPC.

1. A method, comprising:
registering accessibility preferences of a user for performing transactions on terminals;
obtaining the registered accessibility preferences in connection with a transaction of the user on a terminal;
causing a transaction interface associated with the terminal to apply and enforce the accessibility preferences during the transaction;
registering accessibility features provided by retailers at stores of the retailers and on terminals at each store;
maintaining an index of the registered accessibility features;
providing retailer category-based and user proximity-based searching of the index through a user interface; and
providing a legend with search results through the user interface that identifies specific accessibility features associated with the registered accessibility preferences that are supported by each retailer identified in the search results.

2. The method of claim 1, wherein registering further includes receiving, from the user through the user interface, user-selected accessibility features for registration as accessibility preferences of the user.

3. The method of claim 1, wherein registering further includes receiving, from the terminal, user-selected accessibility features for registration as accessibility preferences of the user.

4. The method of claim 1, wherein registering further includes generating a preference code linked to the registered accessibility preferences and sending the preference code to the user interface.

5. The method of claim 1, wherein registering further includes generating a preference code encoded and encapsulated with the registered accessibility preferences and sending the preference code to the user interface.

6. The method of claim 1, wherein obtaining further includes receiving an identifier linked to the user, obtaining the registered accessibility preferences based on the identifier, and sending the registered accessibility preferences to an agent of the terminal and optionally causing further includes instructing the agent to provide the registered accessibility preferences to a transaction manager of the terminal, wherein the transaction manager configures the transaction interface to apply and enforce the registered accessibility preferences.

7. The method of claim 1, wherein registering accessibility preferences comprises:
rendering a transaction interface screen on the terminal, the transaction interface screen comprising an option to register the accessibility preferences;
responsive to a selection of the option by the user, initiating an agent on the terminal;
rendering, by the agent, accessibility feature options in registration screens presented to the user on the terminal;
rendering, by the agent, preview screens on the terminal based on user selections of the accessibility feature options from the registration screens; and
sending, by the agent, the user selections as the registered accessibility preferences to an accessibility manager or a loyalty system to recall and enforce on transaction interfaces during transactions of the user on the terminal and on other terminals.

8. The method of claim 7 further comprising:
providing, by the agent, a transaction option for the user to perform a current transaction with the registered accessibility preferences on the terminal and optionally, responsive to a selection by the user of the transaction option, the method further comprises:
providing the registered accessibility preferences to a transaction manager of the terminal; and
instructing the transaction manager to initiate a current transaction for the user within the transaction interface and apply or enforce the registered accessibility preferences during the current transaction.

9. The method of claim 7 further comprising:
receiving, by the agent, a preference code scanned at the terminal by the user;
obtaining the registered accessibility preferences based on the preference code;
instructing a transaction manager of the terminal to initiate a current transaction for the user within the transaction interface and apply or enforce the registered accessibility preferences during the current transaction; and optionally obtaining further includes decoding the preference code and obtaining the registered accessibility preferences.

10. The method of claim 7 further comprising:
receiving, by a transaction manager of the terminal, a loyalty identifier from the user;
obtaining, by the transaction manager, the registered accessibility preferences from a loyalty system using the loyalty identifier;
configuring, by the transaction manager, the transaction interface to enforce and apply the registered accessibility preferences during a current transaction for the user on the terminal; and
processing, by the transaction manager, the current transaction through the transaction interface.

11. A system, comprising:
a cloud server comprising a cloud processor,
the cloud processor configured to execute instructions that cause the cloud processor to perform operations comprising:
interacting with one or more of user devices and terminals to register accessibility preferences of users;
providing preference codes associated with registered accessibility preferences to the corresponding user devices of registered users;
causing the terminals to enforce and to apply the registered accessibility preferences in transaction interfaces on the terminals during transactions of the registered users;
registering accessibility features provided by retailers at stores of the retailers and on terminals at each store;
maintaining an index of the registered accessibility features;
providing retailer category-based and user proximity-based searching of the index through a user interface; and
providing a legend with search results through the user interface that identifies specific accessibility features associated with the registered accessibility preferences that are supported by each retailer identified in the search results.

12. The system of claim 11, wherein the cloud processor is configured to execute additional instructions that cause the cloud processor to perform second operations comprising:
maintaining the index of retailers and stores associated with the terminals, wherein the index comprises store addresses for the stores, categories assigned to the retailers, and the accessibility features available on store terminals.
